# EUROPEAN PATENT APPLICATION

(11) **EP 4 588 855 A1**
(43) Date of publication of application: **23.07.2025**
(21) Application number: 24186981.7
(22) Date of filing: 07.07.2024
(51) Int. Cl.: B65G 1/04, B65B 5/10, B65G 47/82, B65G 65/00

(54) **AN AUTOMATED STORAGE AND RETRIEVAL SYSTEM**

(30) Priority: 22.01.2024 US 202463623404 P
(71) Applicant: AutoStore Technology AS, 5578 Nedre Vats (NO)
(72) Inventor: Roy, Paul, 5578 Nedre Vats (NO)
(74) Representative: Kilburn & Strode LLP

(57) **Abstract**

The disclosure relates to an automated storage and retrieval system. The system comprises a three-dimensional grid comprising a plurality of storage columns in which a plurality of storage containers are stored one on top of another in vertical stacks, and at least one port through which the storage containers can be transferred into the grid. At least a first storage container of the plurality of storage containers comprises a first side wall and a first side opening in the first side wall. The system further comprises a receiving surface for receiving the first storage container, a first conveying apparatus configured to convey at least a first product item to a first position adjacent to the receiving surface, and a height adjustment mechanism. The height adjustment mechanism is configured to adjust a height of the receiving surface. The height adjustment mechanism is configured to, when the first storage container is positioned on the receiving surface and the at least a first product item is at the first position, position the first side opening beside the at least a first product item. The system further comprises an actuation mechanism configured to move the product item from the first position into the first storage container through the first side opening.

## Description

### TECHNICAL FIELD

The disclosure relates to an automated storage and retrieval system, a storage container, and associated methods. More particularly, it relates to an automated storage and retrieval system comprising a receiving surface and a height adjustment mechanism.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container handling vehicles configured to lift containers from the grid can travel. The container handling vehicles are configured to transport containers from the grid and to deliver them to ports or stations at the periphery of the grid so that the goods within the container can be picked and packed.

Challenges arise when considering how to ensure the process is as smooth and efficient as possible between delivery of product items to the warehouse, and the storage of those product items in an automated storage and retrieval system such as the system described above. A particular challenge arises when considering a product item such as a case which itself contains multiple products, where these products may be used to fulfil different orders. Currently, these cases may be unpacked manually, and the individual products may be loaded into a storage container for transferal to the three-dimensional grid. However, this process is inefficient, can be slow, and requires manual intervention. The manual intervention can involve the need to lift heavy goods, for example if the case contains several beverages. This existing process may also lead to congestion at ports and loading and/or unloading stations.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container handling vehicles configured to retrieve and/or rearrange goods stored within the grid;
Fig. 2 shows a top view of the system of Fig. 1;
Fig. 3A shows a side view of a first robotic container handling vehicle suitable for use in the system of Fig. 1;
Fig. 3B shows a side view of a second robotic container handling vehicle suitable for use in the system of Fig. 1;
Fig. 3C is a perspective side view of the robot of Fig. 3B;
Fig. 4 shows a computing device for implementing the operations described herein;
Fig. 5a and fig. 5b depict a storage container in accordance with the present disclosure.
Fig. 6 depicts another storage container in accordance with the present disclosure.
Fig. 7a and fig. 7b depict an automated storage and retrieval system in accordance with the present disclosure.
Fig. 8 is a flowchart depicting a method according to the present disclosure.
Fig. 9 is a flowchart depicting another method according to the present disclosure.

### DETAILED DESCRIPTION

In overview, and without limitation, the disclosure relates to an automated storage and retrieval system, and an associated computer-implemented method of loading product items into storage containers for storage in such systems. The application relates to a modified design of storage container which comprises at least one side opening, which in most implementations is likely to be in addition to the top opening typically seen in the prior art. The present system comprises a conveying apparatus which is configured to convey a first product item, such as a case of beer, to a first position adjacent to a receiving surface. A storage container comprising a side opening can be positioned on the receiving surface, and a height of the receiving surface (and therefore a height of the product container) is adjustable via a height adjustment mechanism. By controlling the height adjustment mechanism, the height of the storage container can be adjusted such that the side opening of the storage container is beside the product item. An actuation mechanism, which in a simple form may comprise a linear actuator and a pushing member, can then move (e.g. push) the product item from the first position into the first storage container through the first side opening. Another conveying apparatus is configured to convey the now-loaded storage container containing the product item back to a port to be transferred into a grid of the storage and retrieval system.

In some implementations, the actuation mechanism is also configured to retrieve product items from a storage container. In this way, a loaded storage container can be retrieved from the grid, its height can be adjusted to position the side opening next to the first position, and the actuation mechanism can retrieve the product item from the storage container.

This system, and associated method, enables efficient loading and unloading of storage containers. By enabling loading through one or more side openings, product items can be loaded into bins more easily and efficiently, and in an automated manner. This is particularly beneficial when the product item itself comprises a plurality of individual products, for example when the product item is a case containing several beverages. By enabling loading of the case directly into a storage bin in this way, the need for manual opening of the case and loading individual products into the storage bin is removed. Using the example given above of the case of beer, the entire case can be loaded into and retrieved from the grid.

### Automated storage and retrieval system overview

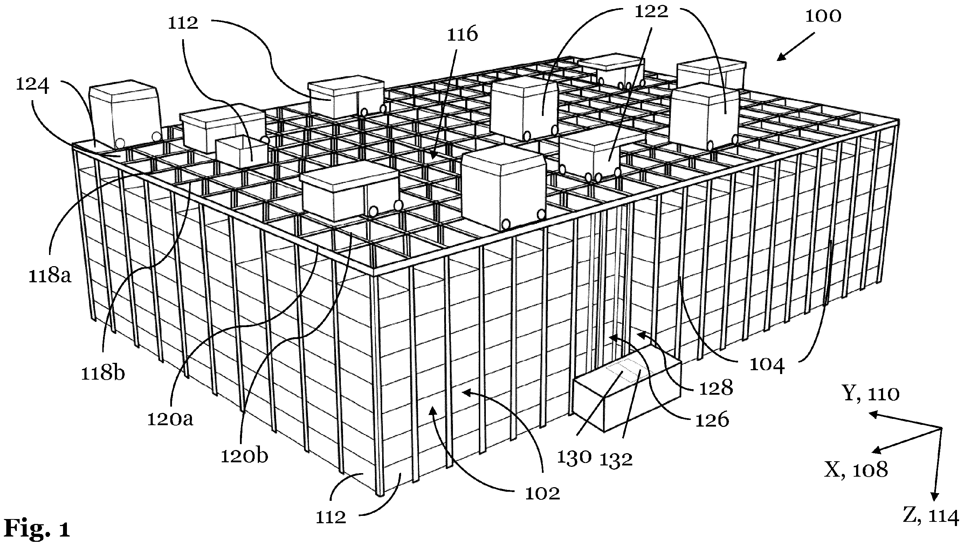

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

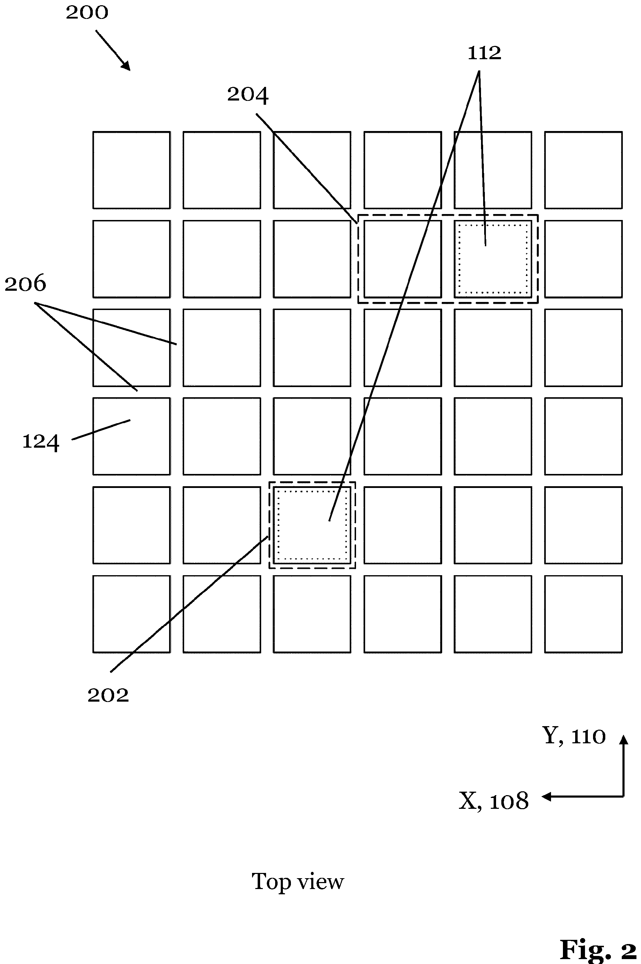

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

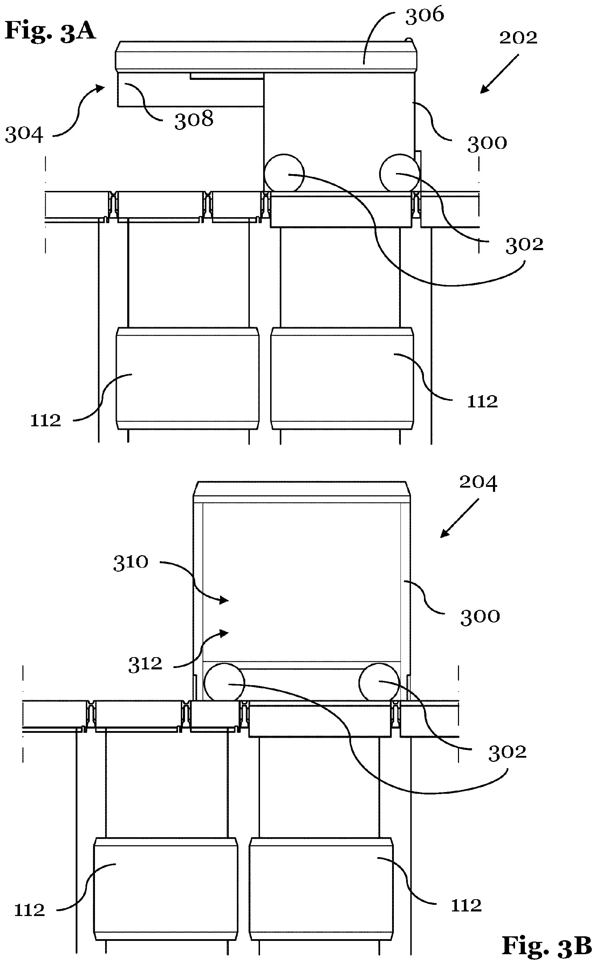

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

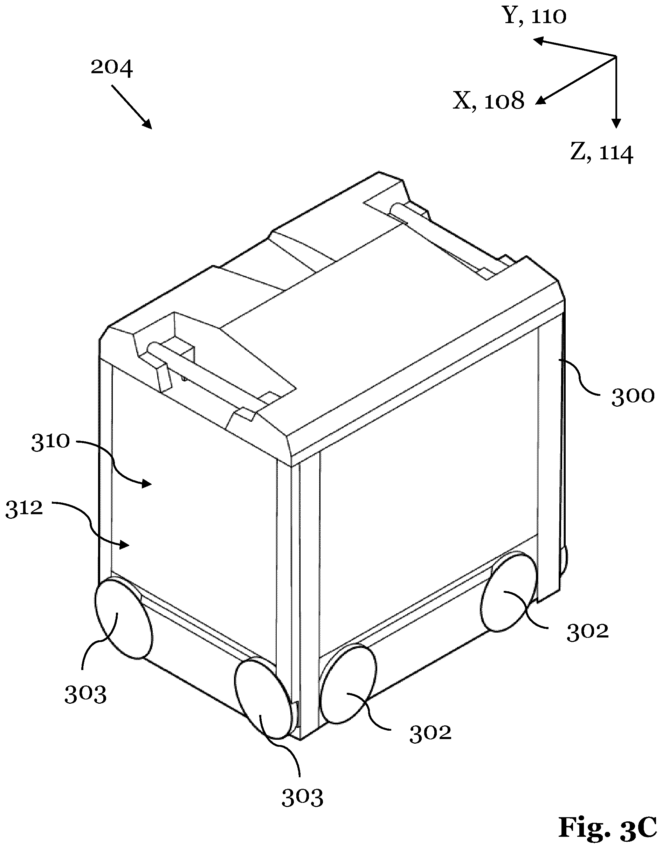

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

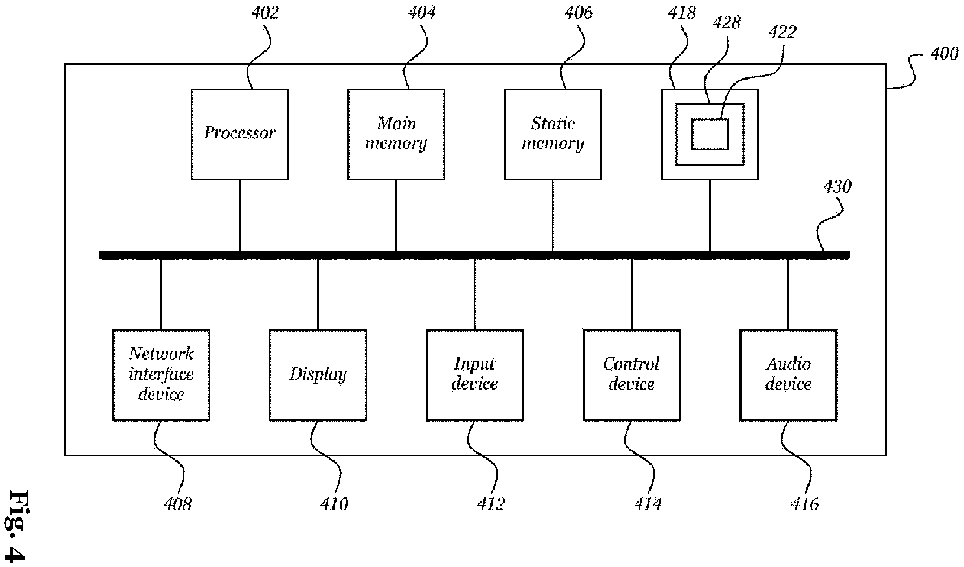

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### A storage container comprising a side opening

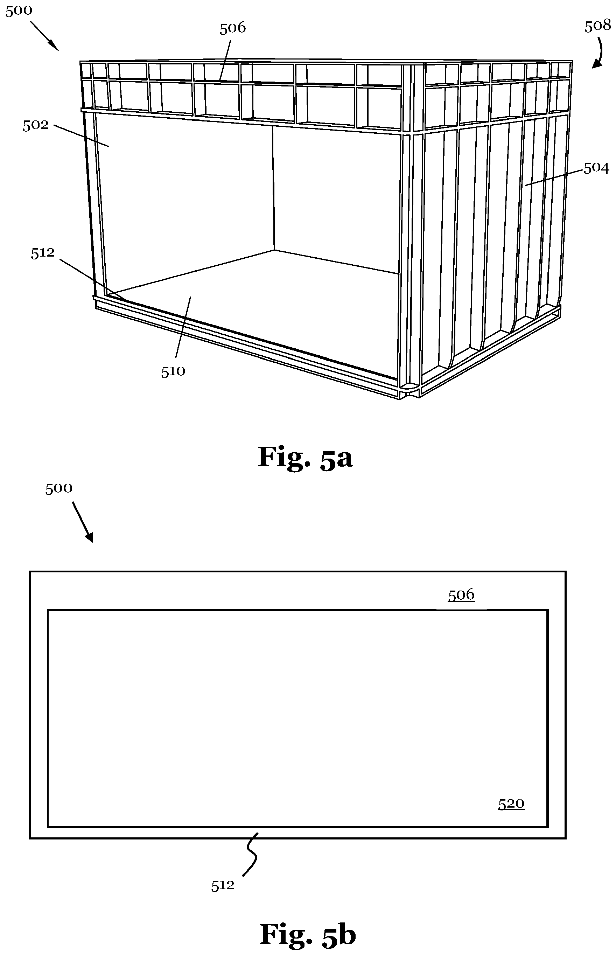

Fig. 5a and 5b depict a storage container 500 according to the present disclosure. Fig. 5a is a sketch and depicts an angled view, whereas fig. 5b is a simple schematic depicting a side-on view. The storage container 500 may be referred to as a "bin" herein. The storage container 500 comprises a base 510, two first parallel side walls 506, 508; two second parallel side walls 502 and 504, and a top opening. The two first parallel side walls 506, 508 are perpendicular to the two second parallel side walls 502 and 504. The first side wall 506 comprises a first side opening 520. The second side wall 506 also comprises a corresponding side opening. Herein, while description will primarily focus on the first side opening 520 in the first side wall 506, it should be noted that, as depicted in figure 5a, a second side opening may take the same form as the first side opening 520 but in the opposite side wall, i.e. the second side wall 508. The first side wall 506 is substantially rectangular and the first side opening 520 is a substantially rectangular aperture formed in the first side wall 506. The storage container 500 further comprises a rim 512 that defines a lower side of the first side opening. The rim 512 may take the form of a lip, or edge. Since the first side hole 520 is an aperture in the first side wall 506, the rim 512 may simply be the lower part of the first side wall 506. The rim 512 sits at a height above the base 510.

The first side opening 520 is shaped and sized to receive one or more product items, such as a case containing individual products. In this way, the storage container 500 may be loaded with one or more products or product items via the first side opening 520 in the first side wall 506, and these products or product items can be retrieved from the storage container 500 via the first side opening 520 (and/or via the corresponding side opening in the second side wall 508). The rim 512 is shaped, positioned, and otherwise configured to restrain movement of a product item positioned on the base 510 of the storage container 500, and thereby prevent it from exiting through the first side opening 520 during movement / transportation of the storage container 500. In part, this is achieved by virtue of the height difference between the base 510 and the rim 512.

### A storage container comprising a plurality of side openings

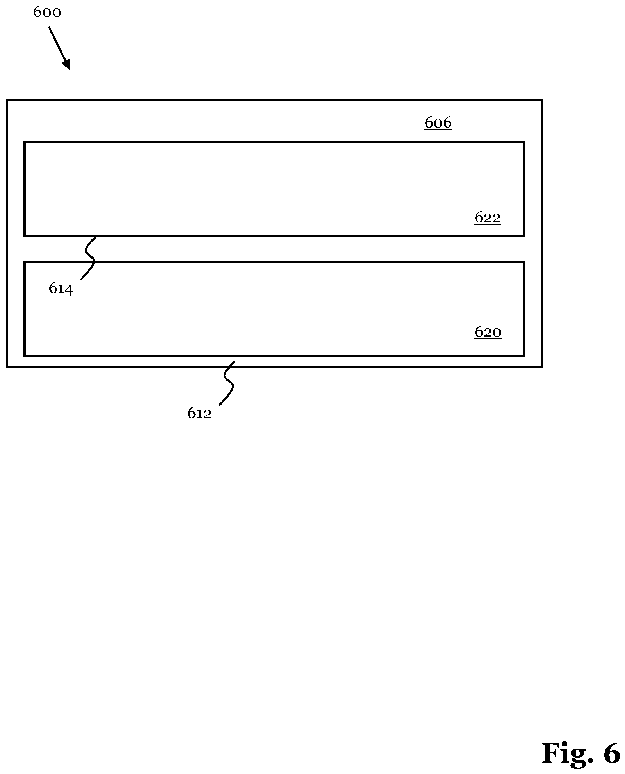

Fig. 6 depicts another storage container 600 according to the present disclosure. Fig. 6 is a simple schematic depicting a side-on view. It should be understood that bin 600 is similar to bin 500 in many respects and the following disclosure will focus primarily on the differences between bin 500 and bin 600. Bin 600 is a `multi-level' bin, and comprises multiple levels. The bin 600 comprises two bases positioned one on top of one another. This structure defines two different, distinct regions within the bin 600 for storing product items. Bin 600 comprises a side wall 606 which comprises two side openings: a first side opening 620 and a second side opening 622. The second side opening 622 is positioned above the first side opening 620. Each of the first and the second side opening 620, 622, is shaped and positioned to receive one or more product items. In this way, for example, a first product item may be introduced into the bin 600 via the first, lower side opening 620. This first product item rests on the lower base of the bin 600. A first rim 612 acts to prevent this first product item from exiting the bin 600 during movement of the bin 600. A second product item may be introduced into the bin 600 via the second, 'upper side opening 622. This second product item rests on the upper base of the bin 600. A second rim 614 acts to prevent this second product item from exiting the bin 600 during movement of the bin 600. In summary, the bin 600 comprises two distinct storage regions, positioned one on top of the other, where each storage region is accessible via a respective side opening 620, 622.

### An automated storage and retrieval system comprising a height adjustment mechanism

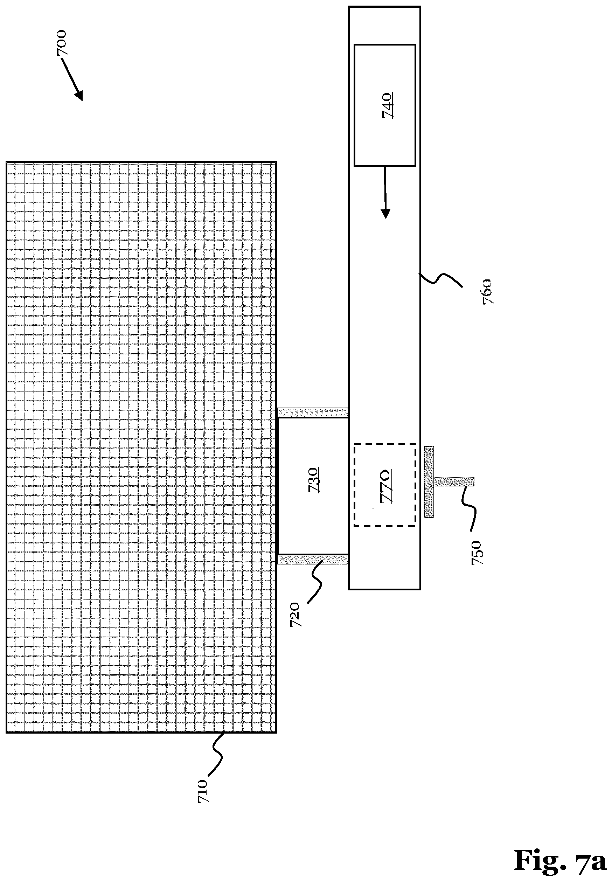

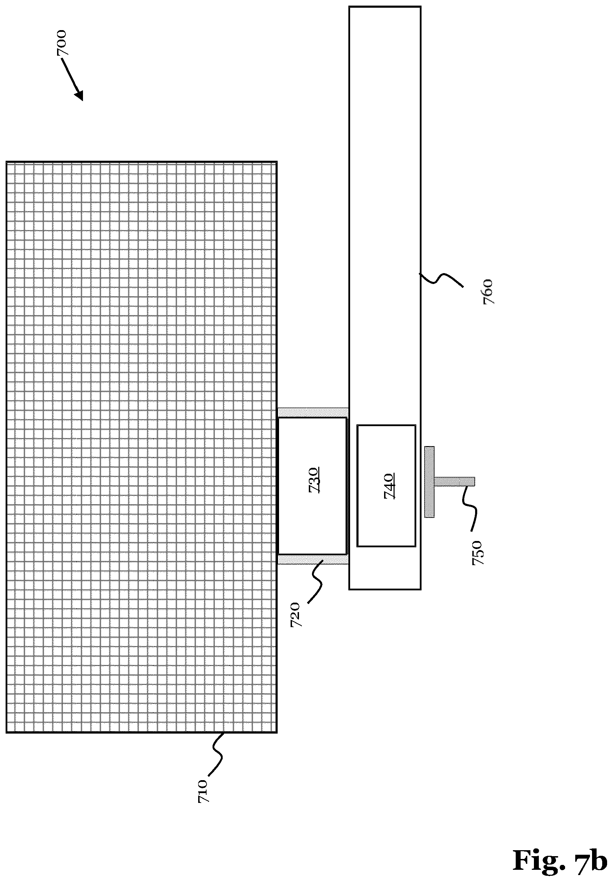

Fig. 7a and fig. 7b depict a top-down view of an automated storage and retrieval system 700 according to the present disclosure. It should be understood that system 700 is similar to the system(s) described above, e.g. with respect to fig. 1, in many respects and the following disclosure will focus primarily on the differences. The system 700 comprises a three-dimensional grid 710 comprising a plurality of storage columns in which a plurality of storage containers are stored one on top of another in vertical stacks, and at least one port through which the storage containers can be transferred into and/or out from the grid 710. One or more of the storage containers in the grid 710 comprises at least one side opening in the manner described above with respect to fig. 5a, fig. 5b and fig. 6. An example of such a storage container is depicted in fig. 7a and 7.b as first storage container 730.

The system 700 further comprises a receiving surface 720 for receiving the first storage container. The receiving surface 720 may be positioned at, in, or nearby the port. The receiving surface 720 may be substantially rectangular. The system 700 comprises a height adjustment mechanism (not depicted in fig. 7a or fig. 7b). The height adjustment mechanism is configured to adjust the height of the receiving surface 720, for example between two or more of a plurality of heights. The height adjustment mechanism can take any suitable form, and may comprise, for example, a linear actuator.

The system 700 comprises a first conveying apparatus 760. The first conveying apparatus 760 may comprise a conveyor belt, for example. The first conveying apparatus 760 is configured for conveying a product item 740 to a first position 770. The first position 770 is adjacent to the receiving surface 720. The first position 770 may be on the first conveying apparatus 760; for example the first position 770 may be a designated position on a conveyor belt. Fig. 7a depicts the product item 740 at a starting position or starting destination, and fig. 7b depicts the product item 740 positioned at the first position 770. In an example, the starting destination may be at or near where the product item 740 is initially delivered to a warehouse containing the grid 710. Several product items may be unloaded, for example from a delivery truck, onto the first conveying means 740. These product items are successively conveyed, via the first conveying means 760, to the first position 770.

The system 700 further comprises an actuation mechanism 750. The actuation mechanism is configured to move the product item 740 from the first position 770 into the first storage container 730 through a side opening in the first storage container 730. The actuation mechanism may take any suitable form, and for example may comprise a loading member and a linear actuator which are, together, configured to push the product item 740 into the first storage container 730 through one of its side openings. The actuation mechanism 750 may further comprise a gripping mechanism configured to move a product item 740 from the first storage container 730 to the first position 770 through the first side opening in the container 730. The gripping mechanism may comprise a sucker or sucking mechanism, for example, or a robotic hand capable of gripping a product item.

The receiving surface 720 may be positioned adjacent to a port of the grid 710, which may take the same or a similar form to the port or ports 130, 132 described above with respect to fig. 1. This facilitates transfer of the loaded container, containing one or more product items, into the grid 700. This transfer may use existing methods and hardware. In an example, a human operator is positioned at the port and is able to transfer the loaded container from the receiving surface to the grid 710 manually.

The system 700 may optionally comprise a second conveying apparatus (not depicted in fig. 7a or fig. 7b). The second conveying apparatus is configured to convey storage containers from the grid 710, via a port, to the receiving surface 720, and/or to convey storage containers from the receiving surface 720 to the port to be transferred into the grid 710. The second conveying apparatus may comprise one or more conveyor belts, robot picking arms, and the like. In this way, empty or partly filled storage containers from the grid 710 can be brought to the receiving surface in order to be loaded via the actuation mechanism 750. After being loaded with a new product item, the loaded storage container can then be brought back into the grid 710 for storage. The receiving surface 720 itself may comprise a conveyor belt. The receiving surface conveyor belt is configured to convey a storage container positioned on the receiving surface to the second conveying apparatus such that, by actuation of the receiving surface conveyor belt and the second conveying apparatus, a storage container containing the product item can be conveyed from the receiving surface 720 to the port. The receiving surface 720 may be positioned adjacent to the second conveying apparatus in order to facilitate this transfer.

The receiving surface 720 may be positioned at or inside a port of the grid 710. As discussed above with respect to figure 1, the three-dimensional grid 710 may comprise a port column which comprises the port. The receiving surface 720 may be positioned within the port column. Storage containers from the grid 710 may thereby be transferred from the grid to the receiving surface of the port, whereby their height is adjusted by the height adjustment mechanism such that one or more product items 740 can be either loaded into, or removed from, the storage container by the actuation mechanism 750. In this implementation, the second conveying apparatus may comprise one or more robotic pickers, which are configured to transfer bins from the grid 710 directly to the receiving surface 720.

The plurality of storage containers in the system 700 may comprise all single-tier bins such as that depicted in fig. 5a and 5b, all multi-tier bins as depicted in fig. 6, or a combination of different types of bin, including bins which do not have any side openings. The system 700 may therefore comprise means for determining the identity and/or type of a particular bin. The system 700 may also comprise means for detecting the product item 740, and/or determining one or more features associated with the product item such as its size, shape and location. For example, the system 700 may comprise one or more sensing apparatuses (not depicted in fig. 7a or 7b). Each sensing apparatus may comprise an RF interrogator configured to interrogate RFID tags, and/or optical detecting means such as a camera. A first sensing apparatus is configured to determine one or more features associated with a storage container to be received by the receiving surface, and a second sensing apparatus configured to determine one or more features associated with the product item 740.

In an example, based on input from a sensing apparatus, it is determined that the size of the product item 740 is below a threshold size. Based on this determination, it is determined that the product item 740 will fit inside one of the smaller storage regions provided by a multi-tier bin. The processing system controls the system 700 such that a multi-tier storage container is retrieved from the grid 710 and positioned on the receiving surface 720. The processing system then controls the height adjustment mechanism such that a side opening of the multi-tier bin is presented next to the product item, and the system is then controlled according to the methodologies described herein to load the product item 740 into the multi-tier bin, and return the loaded bin to the grid 710. Alternatively, if the sensing apparatus determines that the product item 740 is above the size threshold, then a single-tier bin is retrieved from the grid 710. The system 700 is similarly controlled such that a side opening of the single-tier bin is presented next to the product item 740, and using the presently disclosed methods the larger product item 740 can therefore be loaded into the larger storage region provided by the single tier-bin.

Of course, a sensing apparatus comprising a camera is not necessarily required, and known methods of determining a bin identity include using RFID tags and scanners. As described elsewhere herein, the first storage container comprises a computer-readable identifier, which may take any suitable form. The identifier can be scanned or 'read' by a suitably configured sensing apparatus. A sensing apparatus suitably configured and positioned to scan the computer-readable identifier, for example as the storage container approaches the receiving surface, may scan the unique identifier and send one or more signals to the processing system. The processing system may then identify the first storage container based on the one or more signals received from the sensing apparatus, and retrieve information relating to the first storage container from the database. Based on the retrieved information, the height adjustment mechanism can then be controlled to adjust a height of the receiving surface to optimally position the first side opening beside the at least a first product item.

In an example, based on a detection and identification of a bin via communication between a sensing apparatus and the processing system, the height of the receiving surface may be adjusted such that the side opening of the bin is correctly positioned next to, i.e. adjacent, the product item 740 regardless of whether the bin is a single- or multi-tier bin. In particular, the unique identifier of each bin may be scanned to determine whether the bin is a single or multi-tier bin. In an implementation in which there are a mixture of single- and multi-tier bins in the grid 710 which comprise side openings, and optionally also bins which do not comprise side openings, the database of the processing system 400 also stores, in association with the unique identifier of each bin, the number of tiers of each bin, the number of side openings of each bin, and optionally height information relating to the height of any side openings the bin has. In this way, only bins which do comprise side openings are positioned on the receiving surface 720. When a bin comprising a side opening is to be presented to the receiving surface 720 in order to be loaded by the actuation mechanism, it is identified and the height information is retrieved from the database. The height of the storage container 740, when positioned on the receiving surface 720, can then be adjusted based on the retrieved height information. This ensures that the system 700 positions the side opening of the bin optimally next to the product item to enable smooth and efficient loading of the storage container.

### A method of loading product items into storage containers and transferring loaded storage containers into the three-dimensional grid

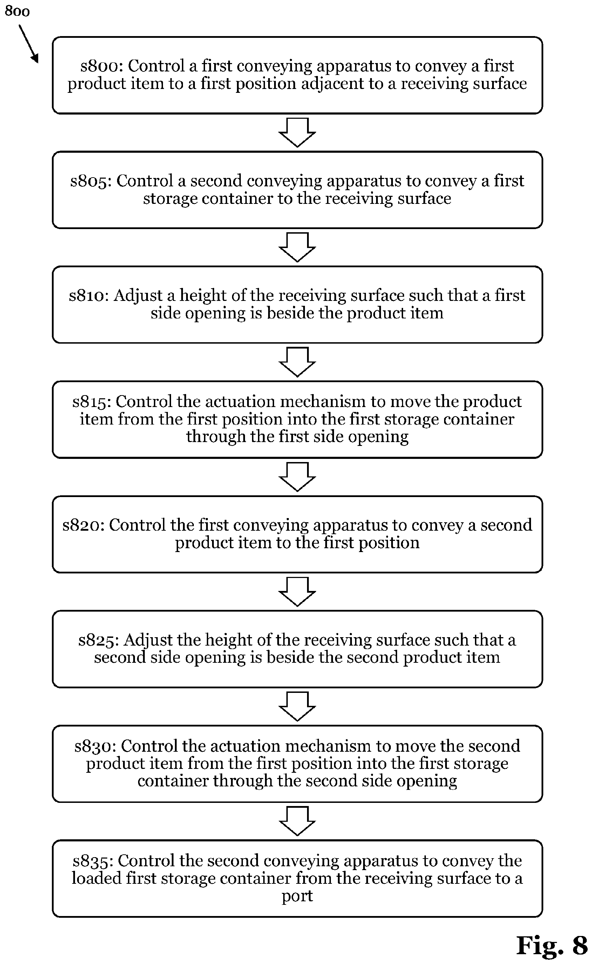

In use, the operation of the system 700 is controlled by one or more processing systems such as the processing system 400 described above with respect to fig. 4. Th system 700 may comprise the processing system. Fig. 8 depicts a method 800 according to the present disclosure, which is suitable to be carried out by such a processing system. The method 800 is described in relation to a multi-tier or multi-level storage container such as the bin 600 described above with respect to fig. 6, but an adapted method which, for example, omits steps s820, s825, and s830, can be used in connection with a single tier or single-level bin such as the bin 500 described above with respect to fig. 5a and fig. 5b.

At step s800, the first conveying apparatus 760 is controlled in order to convey a first product item 740 to the first position 770 adjacent to the receiving surface 720. This may comprise, for example, controlling a conveyor belt and/or one or more robotic gripping arms to move the product item 740 from a starting position to the first position 770.

At step s805, the second conveying apparatus is controlled to convey a first storage container 730 to the receiving surface 720. The first storage container 730 may be partly or completely empty. For a multi-level bin, for example, the upper region may be occupied by a product item, but the lower region may be empty and therefore have capacity to receive a product item from the actuation mechanism. In the following description of method 800, it is assumed that both regions of the storage container are empty.

At step S810, the height of the receiving surface 720 is adjusted such that a first side opening of the product container is beside the product item. In other words, the height of the bin, positioned on the receiving surface 720, is adjusted so that a first side opening of the bin is positioned next to, i.e. adjacent, the product item. Adjusting the height of the receiving surface 720 may comprise positioning the first side opening of the product container such that the opening is horizontally aligned with the product item 740. In an example, a multi-level storage container is raised up so that its lower side opening is presented next to the product item. As will be appreciated after inspection of the remaining steps of the method, an aim of this step is to position the side opening of the storage container so that it is positioned optimally to receive the product item. The height of the storage container may be adjusted to a first height, which has been determined to enable the actuation mechanism to move the product item from the first position into the first storage container through the first side opening.

In a particular implementation, the height to which the receiving surface is adjusted is based on the identity of the storage container. For example, the unique identifier of the storage container is scanned, and information relating to the storage container is retrieved from the database. For example, information relating to the type of bin may be retrieved, including whether the bin is a single- or multi-tier bin, and/or information relating to the number of side openings the bin has, height information associated with the side openings, and/or information relating to which storage regions defined by the bin are empty and available for loading with the product item 740. The height of the receiving surface 720 may then be adjusted based on the information retrieved from the database. For example, if the database indicates that a lower storage region of the storage container 730 is empty and is suitable for receiving the product item 740, then the height of the receiving surface is adjusted based on the retrieved height information such that the lower side opening of the storage container 730 is beside the product item. The height of the receiving surface may therefore be adjusted to a pre-determined height, where the pre-determined height has been pre-determined to be optimal for positioning the first side opening beside the product item. Optionally, there may be several pre-determined heights, each associated with a particular type of bin and/or a particular side opening of each bin.

In another particular implementation, the height adjustment mechanism comprises sensing apparatus such as a camera and a processing system, wherein, together, the camera and processing system are configured to detect the product item, and assess its size, shape and location. Based on this detection and assessment, the height of the receiving surface is adjusted such that the first side opening of the bin is positioned next to, i.e. adjacent, the product item. Optionally, the same camera and processing system, or another similar camera and processing system, may be configured to detect the storage container, and determine whether the storage container has a single or multiple side openings. This determination may comprise determining whether the storage container is a single- or a multi-tier bin, and adjusting the height of the receiving surface based on this determination.

At step S815, the method 800 comprises controlling the actuation mechanism 750 to move the product item 730 from the first position 740 into the first storage container through the first side opening. In an example, a loading / pushing member of the actuation mechanism is controlled to push the product item 730 through the lower side opening of the multi-level bin, thereby loading the lower region of the multi-level bin.

Optionally, at step s820, the first conveying apparatus 760 is controlled to convey a second product item to the first position 740. This may comprise actuating a conveyor belt to move the second product item to the specified position next to the actuation mechanism 750.

Optionally, at step s825, the height of the receiving surface, and thereby the height of the storage container, is adjusted such that a second side opening of the storage container is beside the second product item. Step s825 is similar to step s810, and has the aim of positioning the second side opening such that a product item can be pushed into the second side opening by the actuation mechanism 750. In an example, the upper side opening of the multi-tier bin is positioned adjacent to the product item 740. As described above, the height of the receiving surface may be adjusted based on the identify of the bin and/or information about the bin retrieved from the database. The height of the receiving surface may be adjusted to second height, which has been determined to enable the actuation mechanism to move the product item from the first position into the storage container through its second side opening.

Optionally, at step s830, the actuation mechanism 750 is controlled to move the second product item from the first position 770 into the first storage container through the second side opening. In an example, the loading / pushing member of the actuation mechanism 750 is controlled to push the second storage item into the upper side opening of the multi-tier bin. As a result of step s830, the multi-tier bin is fully loaded, with a first product item resting on the upper base of the bin, and a second product item resting on a lower base of the bin.

Optionally, at step s835, the second conveying apparatus is controlled to convey the loaded first storage container from the receiving surface 720 to a port of the grid 710. This process may also optionally comprise adjusting the height of the receiving surface 720, and thereby the loaded storage container 730, to bring the loaded storage container to an appropriate height to be collected and/or conveyed by the second conveying apparatus. In an implementation, step s835 may comprise controlling a first conveyor belt located at or on the receiving surface 720, and another conveyor belt positioned adjacent to the receiving surface 720, in order to convey the loaded storage container containing the product item from the receiving surface 720 to the port.

For a multi-level bin, the method 800 therefore comprises adjusting the height of the receiving surface, via the height adjustment mechanism, when the first storage container is positioned on the receiving surface. The height of the receiving surface is adjusted such that, when the first storage container is positioned at a first height, the actuation mechanism can move a first product item from the first position into the first storage container through the first side opening, and when the second storage container is positioned at a second height, the actuation mechanism can move a second product item from the first position into the first storage container through the second side opening. The height adjustment mechanism may also be configured to further move between additional different heights, for example a starting height which is optimal for receiving the storage container from the second conveying system, to the first height, then to the second height, then back to a final height which is optimal for returning the now-loaded storage container back to the second conveying apparatus such that the loaded storage container can be returned to the port.

Thee heights to which the height adjustment mechanism may move the receiving surface may be pre-determined. The heights may be stored in a memory associated with the height adjustment mechanism, for example the memory 404, the static memory 406 , and/or the secondary memory 418. The heights are pre-determined to be optimal to achieve the function associated with the height, for example the first height has been determined to be an optimal height such that the first side opening is positioned next to the product item, and the second height has been determined to be an optimal height such that the second side opening is positioned next to the product item.

Method 800 may comprise an additional step of determining whether a bin to be loaded is a single-tier or a multi-tier bin, and adapting the method accordingly based on this determination. For example, if a bin to be loaded is a multi-tier bin, then the full method 800 may be carried out, whereas if the bin to be loaded is a single-tier bin, then an adapted method 800 which, for example, does not comprise optional steps s820, s825, and s830 may be carried out. The method 800 can thereby be adapted to a grid that comprises only single-tier bins or only multi-tier bins. The method 800 can also be adapted to a grid that contains a mixture of single-tier and multi-tier bins. In this implementation, known techniques of bin identification and/or recognition are employed in order to enable determination by the system 700 of whether a bin to be received by the receiving surface is either a single- or multi-level bin. The height(s) to which the receiving surface is adjusted are then adjusted base don the identification and/or recognition.

The method 800, system 700, and storage containers 500 and 600 are advantageous for several reasons. By enabling loading through one or more side openings, product items can be loaded into bins more easily and efficiently, and in an automated manner. This is particularly beneficial when the product item itself comprises a plurality of individual products, for example when the product item is a case containing several beverages. By enabling loading of the case directly into a storage bin in this way, the need for manual opening of the case and loading individual products into the storage bin is removed. When an order pertaining to the product item is received, the entire case can be retrieved simply using existing methods. By removal of a manual step, especially one which may include lifting a heavy product item, operator safety and well-being is improved.

### A method of retrieving product items from storage containers

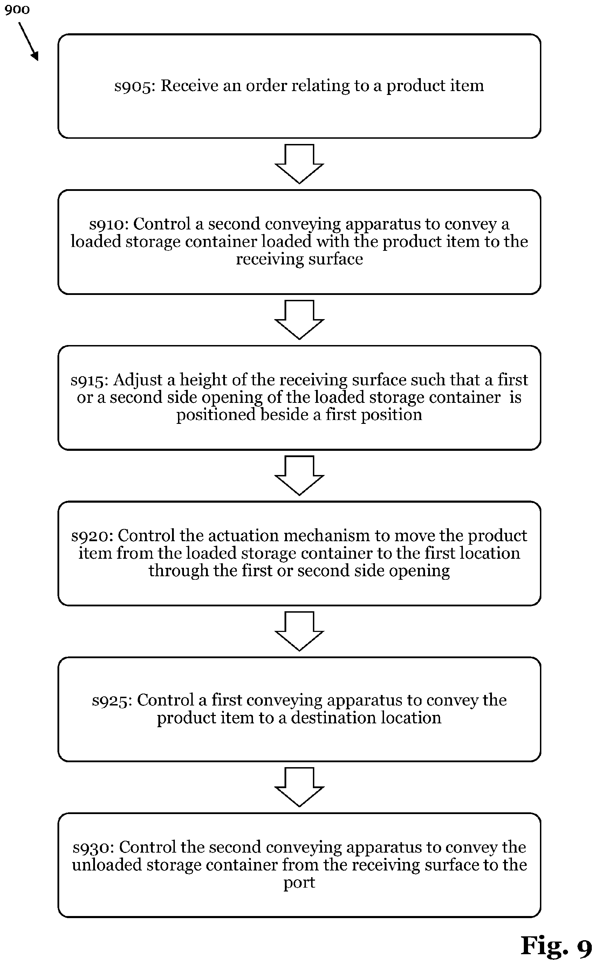

Fig. 9 depicts a method 900 of retrieving a product item from an automated storage and retrieval system according to the present disclosure. At step s905, an order is received relating to a product item. For example, a customer may order either the product item itself, or a product comprised within the product item. This order is received, for example at the processing system 400, for fulfilment (in part) by the automated storage and retrieval system 700. The order is of a nature which necessitates retrieval of the product item from the grid 710. At step s910, the second conveying apparatus is controlled to convey a loaded storage container, containing (i.e. loaded with) the relevant product item, to the receiving surface 720.

At step s915, the height of the receiving surface is adjusted via the height adjustment mechanism such that the first or a second side opening of the loaded storage container is beside a first position. For example, if the storage container is a single-tier box, then it's side opening is positioned beside the first position, so that the storage container is well-positioned to allow the actuation mechanism to retrieve the product item from the bin. In another example, the relevant side opening of a multi-tier bin is positioned adjacent to the first position, so that the storage container is well-positioned to allow the actuation mechanism to retrieve the product item from the relevant section of the bin in which it is housed.

At step s920, the actuation mechanism 750 is controlled to move the product item from the loaded storage container, to the first location 760, through the first or second side opening. In an example, the product item is now positioned on a conveyor belt of the first conveying mechanism. At step s925, the first conveying apparatus is then controlled to convey the product item to a destination location, such as to a loading station where the product item can be packed ready for shipping to a customer associated with the order received at step s905.

While the methods 800 and 900 have been described separately, it will be understood by the skilled person that aspects of these methods may be combined. For example, a storage container may be unloaded using method 900. Rather than returning the now-empty storage container to the grid 710, the storage container may then be loaded with product items using method 800 before it is returned to the grid 710.

The benefits of method 900 are similar to those described above with respect to method 800. For example, the method enables improved efficiency and speed of product item retrieval, and hence of order fulfilment. By automating the bin loading and unloading, congestion at ports of the grid can be reduced.

Reference is made herein to sensing apparatuses configured to determine information about bins approaching a receiving surface, and/or about product items approaching a first position. It should be understood that these apparatuses are optional and are explained herein as examples which may be included in an implementation of the presently disclosed methodologies. In alternative implementations, for example, each bin is assigned a bin ID as described above. The processing system controls the movement of every bin in the system, and therefore the ID and location of every bin in the system is known to the processing system. This may or may not be supplemented by communication between the bins and processing system and/or sensing apparatuses such as RFID and optical sensing apparatuses.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The following paragraphs are intended to demonstrate that certain features may be included together with other features in one or more embodiments of the disclosed invention. These are merely meant to be explicit examples of combinations of features and not an exhaustive list.

In one or more embodiments, the present invention relates to an automated storage and retrieval system comprising: a three-dimensional grid comprising a plurality of storage columns in which a plurality of storage containers are stored one on top of another in vertical stacks, and at least one port through which the storage containers can be transferred into the grid, wherein at least a first storage container of the plurality of storage containers comprises a first side wall and a first side opening in the first side wall; a receiving surface for receiving the first storage container; a first conveying apparatus configured to convey at least a first product item to a first position adjacent to the receiving surface; a height adjustment mechanism configured to adjust a height of the receiving surface, wherein the height adjustment mechanism is configured, when the first storage container is positioned on the receiving surface and the at least a first product item is at the first position, to position the first side opening beside the at least a first product item; and an actuation mechanism configured to move the product item from the first position into the first storage container through the first side opening. The actuation mechanism may comprise a loading member configured to push the product item into the first storage container through the first side opening.

In any embodiment, the receiving surface may be positioned adjacent to the at least one port. In any embodiment, the receiving surface is positioned inside the at least one port. The three-dimensional grid may further comprise a port column, the port column may comprise the at least one port, and wherein the receiving surface may be positioned within the port column. Any embodiment may further comprise a second conveying apparatus configured to: convey the first storage container from the at least one port to the receiving surface, and convey the first storage container from the receiving surface to the at least one port to be transferred into the three-dimensional grid. The receiving surface comprises a conveyor belt, and the receiving surface is positioned adjacent to the second conveying apparatus such that, by actuation of the conveyor belt and the second conveying apparatus, the storage container can be conveyed from the receiving surface to the at least one port.

Any embodiment may further comprise the first storage container, wherein the first storage container further comprises a second side opening, and wherein each of the first and the second side opening is shaped and positioned to receive one or more product items. The height adjustment mechanism being further configured, when the first storage container is positioned on the receiving surface, to adjust the height of the first storage container between a first and a second height, wherein the first height has been determined to enable the actuation mechanism to move a product item from the first position into the first storage container through the first side opening, and the second height has been determined to enable the actuation mechanism to move a product item from the first position into the first storage container through the second side opening.

In any embodiment, the first storage container may comprise one or more of: a base; two first parallel side walls comprising the first side wall; and two second parallel side walls perpendicular to the two first parallel side walls; a top opening; wherein the first storage container comprises a rim that defines a lower side of the first side opening, wherein the rim is configured to restrain movement of the first product item and thereby prevent it from exiting through the first side opening during transportation of the first storage container. In any embodiment, the storage containers of the plurality of storage containers may be transferred out from the grid through the at least one port; and the actuation mechanism is further configured to move the product item from the first storage container to the first position through the first side opening. The actuation mechanism may further comprise a gripping mechanism configured to move the product item from the first storage container to the first position through the first side opening.

Any embodiment may further comprise: a processing system configured to control operation of the first conveying apparatus, height adjustment mechanism, and actuation mechanism, and further comprising a memory in which is stored a database; and wherein the processing system is further configured to: retrieve, based on an identity of the first storage container, information relating to the first storage container from the database; and control, based on the retrieved information relating to the first storage container, the height adjustment mechanism to adjust a height of the receiving surface to position the first side opening beside the at least a first product item.

In one or more embodiments, the present invention relates to a computer-implemented method of loading at least a first product item into a first storage container of a plurality of storage containers, and transferring the first storage container into a three-dimensional grid of an automated storage and retrieval system, wherein the automated storage and retrieval system is the system of any preceding claim, and wherein the first storage container comprises a first side wall and a first side opening in the first side wall; the method comprising: controlling a first conveying apparatus to convey the first product item to a first position adjacent to a receiving surface; controlling a second conveying apparatus to convey a first storage container to the receiving surface; adjusting, via a height adjustment mechanism, a height of the receiving surface such that the first side opening is beside the first product item; controlling an actuation mechanism to move the first product item from the first position into the first storage container through the first side opening; and controlling the second conveying apparatus to convey the first storage container containing the product item from the receiving surface to the at least one port to be transferred into the three-dimensional grid.

In one or more embodiments, the present invention relates to a computer-readable medium comprising instructions which, when executed by a processor of a system, cause the device to perform the above-described method.

Examples of the present disclosure are set out in the following numbered clauses.
1. An automated storage and retrieval system comprising:
   a three-dimensional grid comprising a plurality of storage columns in which a plurality of storage containers are stored one on top of another in vertical stacks, and at least one port through which the storage containers can be transferred into the grid, wherein at least a first storage container of the plurality of storage containers comprises a first side wall and a first side opening in the first side wall;
   a receiving surface for receiving the first storage container;
   a first conveying apparatus configured to convey at least a first product item to a first position adjacent to the receiving surface;
   a height adjustment mechanism configured to adjust a height of the receiving surface, wherein the height adjustment mechanism is configured, when the first storage container is positioned on the receiving surface and the at least a first product item is at the first position, to position the first side opening beside the at least a first product item; and
   an actuation mechanism configured to move the product item from the first position into the first storage container through the first side opening.
2. The system of clause 1, wherein the actuation mechanism comprises a loading member configured to push the product item into the first storage container through the first side opening.
3. The system of clause 1, wherein the receiving surface is positioned adjacent to the at least one port.
4. The system of clause 1, wherein the receiving surface is positioned inside the at least one port.
5. The system of clause 4, wherein the three-dimensional grid further comprises a port column, the port column comprising the at least one port, and wherein the receiving surface is positioned within the port column.
6. The system of clause 1, further comprising a second conveying apparatus configured to:
   convey the first storage container from the at least one port to the receiving surface, and
   convey the first storage container from the receiving surface to the at least one port to be transferred into the three-dimensional grid.
7. The system of clause 6, wherein the receiving surface comprises a conveyor belt, and the receiving surface is positioned adjacent to the second conveying apparatus such that, by actuation of the conveyor belt and the second conveying apparatus, the storage container can be conveyed from the receiving surface to the at least one port.
8. The system of clause 1, further comprising the first storage container, wherein the first storage container further comprises a second side opening, and wherein each of the first and the second side opening is shaped and positioned to receive one or more product items.
9. The system of clause 8, the height adjustment mechanism being further configured, when the first storage container is positioned on the receiving surface, to adjust the height of the first storage container between a first and a second height, wherein the first height has been determined to enable the actuation mechanism to move a product item from the first position into the first storage container through the first side opening, and the second height has been determined to enable the actuation mechanism to move a product item from the first position into the first storage container through the second side opening.
10. The system of clause 1, the first storage container comprising one or more of:
   a base;
   two first parallel side walls comprising the first side wall; and
   two second parallel side walls perpendicular to the two first parallel side walls; a top opening;
   wherein the first storage container comprises a rim that defines a lower side of the first side opening, wherein the rim is configured to restrain movement of the first product item and thereby prevent it from exiting through the first side opening during transportation of the first storage container.
11. The system of clause 1, wherein the storage containers of the plurality of storage containers may be transferred out from the grid through the at least one port; and the actuation mechanism is further configured to move the product item from the first storage container to the first position through the first side opening.
12. The system of clause 11, wherein the actuation mechanism further comprises a gripping mechanism configured to move the product item from the first storage container to the first position through the first side opening.
13. The system of clause 1, further comprising:
   a processing system configured to control operation of the first conveying apparatus, height adjustment mechanism, and actuation mechanism, and further comprising a memory in which is stored a database; and
   wherein the processing system is further configured to:
      retrieve, based on an identity of the first storage container, information relating to the first storage container from the database; and
      control, based on the retrieved information relating to the first storage container, the height adjustment mechanism to adjust a height of the receiving surface to position the first side opening beside the at least a first product item.
14. A computer-implemented method of loading at least a first product item into a first storage container of a plurality of storage containers, and transferring the first storage container into a three-dimensional grid of an automated storage and retrieval system, wherein the automated storage and retrieval system is the system of any preceding clause, and wherein the first storage container comprises a first side wall and a first side opening in the first side wall;
   the method comprising:
   controlling a first conveying apparatus to convey the first product item to a first position adjacent to a receiving surface;
   controlling a second conveying apparatus to convey a first storage container to the receiving surface;
   adjusting, via a height adjustment mechanism, a height of the receiving surface such that the first side opening is beside the first product item;
   controlling an actuation mechanism to move the first product item from the first position into the first storage container through the first side opening; and
   controlling the second conveying apparatus to convey the first storage container containing the product item from the receiving surface to the at least one port to be transferred into the three-dimensional grid.
15. A computer-readable medium comprising instructions which, when executed by a processor of a system, cause the device to perform the method of clause 14.

## Claims

1. An automated storage and retrieval system comprising:
a three-dimensional grid comprising a plurality of storage columns in which a plurality of storage containers are stored one on top of another in vertical stacks, and at least one port through which the storage containers can be transferred into the grid, wherein at least a first storage container of the plurality of storage containers comprises a first side wall and a first side opening in the first side wall;
a receiving surface for receiving the first storage container;
a first conveying apparatus configured to convey at least a first product item to a first position adjacent to the receiving surface;
a height adjustment mechanism configured to adjust a height of the receiving surface, wherein the height adjustment mechanism is configured, when the first storage container is positioned on the receiving surface and the at least a first product item is at the first position, to position the first side opening beside the at least a first product item; and
an actuation mechanism configured to move the product item from the first position into the first storage container through the first side opening.

2. The system of claim 1, wherein the actuation mechanism comprises a loading member configured to push the product item into the first storage container through the first side opening.

3. The system of any preceding claim, wherein the receiving surface is positioned adjacent to the at least one port.

4. The system of claim 1 or claim 2, wherein the receiving surface is positioned inside the at least one port.

5. The system of claim 4, wherein the three-dimensional grid further comprises a port column, the port column comprising the at least one port, and wherein the receiving surface is positioned within the port column.

6. The system of any preceding claim, further comprising a second conveying apparatus configured to:
convey the first storage container from the at least one port to the receiving surface, and
convey the first storage container from the receiving surface to the at least one port to be transferred into the three-dimensional grid.

7. The system of claim 6, wherein the receiving surface comprises a conveyor belt, and the receiving surface is positioned adjacent to the second conveying apparatus such that, by actuation of the conveyor belt and the second conveying apparatus, the storage container can be conveyed from the receiving surface to the at least one port.

8. The system of any preceding claim, further comprising the first storage container, wherein the first storage container further comprises a second side opening, and wherein each of the first and the second side opening is shaped and positioned to receive one or more product items.

9. The system of claim 8, the height adjustment mechanism being further configured, when the first storage container is positioned on the receiving surface, to adjust the height of the first storage container between a first and a second height, wherein the first height has been determined to enable the actuation mechanism to move a product item from the first position into the first storage container through the first side opening, and the second height has been determined to enable the actuation mechanism to move a product item from the first position into the first storage container through the second side opening.

10. The system of any preceding claim, the first storage container comprising one or more of:
a base;
two first parallel side walls comprising the first side wall; and
two second parallel side walls perpendicular to the two first parallel side walls; a top opening;
wherein the first storage container comprises a rim that defines a lower side of the first side opening, wherein the rim is configured to restrain movement of the first product item and thereby prevent it from exiting through the first side opening during transportation of the first storage container.

11. The system of any preceding claim, wherein the storage containers of the plurality of storage containers may be transferred out from the grid through the at least one port; and the actuation mechanism is further configured to move the product item from the first storage container to the first position through the first side opening.

12. The system of claim 11, wherein the actuation mechanism further comprises a gripping mechanism configured to move the product item from the first storage container to the first position through the first side opening.

13. The system of any preceding claim, further comprising:
a processing system configured to control operation of the first conveying apparatus, height adjustment mechanism, and actuation mechanism, and further comprising a memory in which is stored a database; and
wherein the processing system is further configured to:
retrieve, based on an identity of the first storage container, information relating to the first storage container from the database; and
control, based on the retrieved information relating to the first storage container, the height adjustment mechanism to adjust a height of the receiving surface to position the first side opening beside the at least a first product item.

14. A computer-implemented method of loading at least a first product item into a first storage container of a plurality of storage containers, and transferring the first storage container into a three-dimensional grid of an automated storage and retrieval system, wherein the automated storage and retrieval system is the system of any preceding claim, and wherein the first storage container comprises a first side wall and a first side opening in the first side wall;
the method comprising:
controlling a first conveying apparatus to convey the first product item to a first position adjacent to a receiving surface;
controlling a second conveying apparatus to convey a first storage container to the receiving surface;
adjusting, via a height adjustment mechanism, a height of the receiving surface such that the first side opening is beside the first product item;
controlling an actuation mechanism to move the first product item from the first position into the first storage container through the first side opening; and
controlling the second conveying apparatus to convey the first storage container containing the product item from the receiving surface to the at least one port to be transferred into the three-dimensional grid.

15. A computer-readable medium comprising instructions which, when executed by a processor of a system, cause the device to perform the method of claim 14.
